# EUROPÄISCHE PATENTANMELDUNG

(11) **EP 2 725 246 A2**
(43) Veröffentlichungstag der Anmeldung: **30.04.2014**
(21) Anmeldenummer: 13189980.9
(22) Anmeldetag: 24.10.2013
(51) Int. Cl.: F16C 33/74, F16C 33/78, F16C 41/00, F16C 19/06

(54) **Schienenfahrzeug-Fahrmotor-Lageranordnung**

(30) Priorität: 25.10.2012 DE 102012219483
(71) Anmelder: Aktiebolaget SKF, 41 550 Göteborg (SE)
(72) Erfinder: Forster, Thomas, 3340 Waidhofen (AT); Mocnik, Alexander, 4400 Steyr (AT); Zauner, Matthias, 4523 Sierninghofen (AT)
(74) Vertreter: Kuhstrebe, Jochen

(57) **Zusammenfassung**

Die Erfindung betrifft eine Schienenfahrzeug-Fahrmotor-Lageranordnung (1), umfassend mindestens ein Wälzlager (2), das einen Innenring (3) und einen Außenring (4) aufweist, wobei zwischen Innenring (3) und Außenring (4) mindestens eine Reihe Wälzkörper (5) angeordnet ist, wobei die Lageranordnung (1) zumindest in einem axialen Endbereich des Wälzlagers (2) eine Dichtungsanordnung (6) aufweist. Um die Dichtungsfunktion für die Anwendung in Schienenfahrzeug-Fahrmotoren zu optimieren, sieht die Erfindung vor, dass die Dichtungsanordnung (6) aufweist: einen stationären Trägerkörper (7), der mit einem der Lagerringe (4) drehfest verbunden ist, und einen rotierenden Dichtungsring (8), der mit dem anderen der beiden Lagerringe (3) direkt oder indirekt drehfest verbunden ist, wobei der stationäre Trägerkörper (7) eine umlaufende Ringnut (9) zum Auffangen und Ableiten von Flüssigkeit aufweist, wobei der rotierende Dichtungsring (8) eine sich radial erstreckende Anlauffläche (10) aufweist, an der mindestens zwei radial versetzte Dichtungselemente (11, 12) reibend anlaufen, die mit dem stationären Trägerkörper (7) fest verbunden sind, und wobei zwischen dem stationären Trägerkörper (7) und dem rotierenden Dichtungsring (8) ein sich in axiale Richtung (a) erstreckender Dichtungsspalt (13) ausgebildet ist.

## Beschreibung

Die Erfindung betrifft eine Schienenfahrzeug-Fahrmotor-Lageranordnung, umfassend mindestens ein Wälzlager, das einen Innenring und einen Außenring aufweist, wobei zwischen Innenring und Außenring mindestens eine Reihe Wälzkörper angeordnet ist, wobei die Lageranordnung zumindest in einem axialen Endbereich des Wälzlagers eine Dichtungsanordnung aufweist.

Im Schienenfahrzeugbau und hier bei elektrischen Fahrmotoren des Schienenfahrzeugs kommen Lageranordnungen der genannten Art zum Einsatz (zumeist als Zylinderrollenlager oder als Rillenkugellager ausgebildet). Die Dichtungsanordnung ist hier zumeist als Labyrinthdichtung ausgebildet, so dass die Reibung während des Betriebs des Lagers gering bleibt. Für viele Anwendungsfälle ist eine solche Abdichtung ausreichend. Weitergehende Dichtungselemente werden meist nicht eingesetzt, um die Reibung während des Betriebs gering zu halten.

Die Lageranordnung ist zumeist mit einer Lebensdauerfüllung an Schmierstoff versehen. Beim Einsatz der genannten Dichtungselemente kommt es mitunter nachteilig zum Eintritt von Wasser und Schmutz in das Lager, so dass die Lebensdauer der Lageranordnung entsprechend herabgesetzt ist. Es hat sich herausgestellt, dass die vorbekannten Lager unter dem Gesichtspunkt der Abdichtung und des Schutzes des Wälzlagers in manchen Anwendungsfällen also nicht zufriedenstellend arbeiten.

Es wurde bereits versucht, mit erweiterten Labyrinthdichtungen das Problem zu beseitigen, was aber kostenintensiv ist und nicht immer den gewünschten Erfolg sicherstellt.

Der Erfindung liegt die **Aufgabe** e zugrunde, eine gattungsgemäße Lageranordnung eines Fahrmotors eines Schienenfahrzeugs so fortzubilden, dass unter Berücksichtigung einer möglichst geringen Reibung während des Betriebs eine verbesserte Abdichtung des Wälzlagers erreicht wird. Es soll dabei ein optimaler Kompromiss zwischen der Dichtigkeit der Anordnung und dem sich im Betrieb ergebenden Reibmoment bei der Drehung des Lagers erreicht werden.

Die **Lösung** dieser Aufgabe durch die Erfindung ist dadurch gekennzeichnet, dass die Dichtungsanordnung einen stationären Trägerkörper aufweist, der mit einem der Lagerringe direkt oder indirekt drehfest verbunden ist, und einen rotierenden Dichtungsring, der mit dem anderen der beiden Lagerringe direkt oder indirekt drehfest verbunden ist, wobei der stationäre Trägerkörper eine umlaufende Ringnut zum Auffangen und Ableiten von Flüssigkeit aufweist, wobei der rotierende Dichtungsring eine sich radial erstreckende Anlauffläche aufweist, an der mindestens zwei radial versetzte Dichtungselemente reibend anlaufen, die mit dem stationären Trägerkörper fest verbunden sind, und wobei zwischen dem stationären Trägerkörper und dem rotierenden Dichtungsring ein sich in axiale Richtung erstreckender Dichtungsspalt ausgebildet ist.

Der rotierende Dichtungsring kann dabei insbesondere indirekt mit einem Lagerring verbunden sein, indem er mit einer rotierenden Motorwelle verbunden ist, auf der der Lagerring sitzt.

Der rotierende Dichtungsring kann an seinem radial außenliegenden Ende einen sich in axiale Richtung erstreckenden Überstand aufweisen, der eine Stirnseite des stationären Trägerkörpers überragt. Dieser Überstand schließt bevorzugt mit einer Seitenfläche der umlaufenden Ringnut axial bündig ab. Zwischen dem Überstand und dem stationären Trägerkörper kann ein sich in axiale Richtung erstreckender Dichtungsspalt ausgebildet sein, was es ermöglicht, den Eintritt von Wasser bereits an dieser Stelle effizient abzuhalten.

Der rotierende Dichtungsring kann an seinem radial außenliegenden Ende mindestens eine, vorzugsweise zwei, konisch ausgebildete Begrenzungsflächen aufweist.

Der stationäre Trägerkörper kann in seiner dem rotierenden Dichtungsring zugewandten stirnseitigen Bereich mindestens zwei radial versetzte Ringnuten zur Aufnahme je eines Dichtungselements aufweisen. Er kann weiterhin einen den sich in axiale Richtung erstreckenden Dichtungsspalt begrenzenden axialen Ringabschnitt aufweisen, wobei sich der Ringabschnitt in eine ringnutförmige Ausnehmung hinein erstreckt, die stirnseitig an dem sich drehenden Lagerring ausgebildet ist. Hierbei ist bevorzugt vorgesehen, dass die ringnutförmige Ausnehmung durch eine zylindrische Fläche des sich drehenden Lagerrings sowie von einem auf die zylindrische Fläche aufgesetzten separaten Bauteil gebildet wird; das besagte Bauteil ist vorzugsweise ein Impulsgeber für ein Sensorelement, das fest im stationären Trägerkörper montiert ist.

Im stationären Trägerkörper kann mindestens ein Schmierelement montiert sein, mit dem Schmierstoff in den Bereich der Dichtungsanordnung eingespritzt werden kann. Das Schmierelement steht dabei bevorzugt fluidisch mit einem Kanal in Verbindung, der in den Ringraum zwischen den mindestens zwei Dichtungselementen und dem sich in axiale Richtung erstreckenden Dichtungsspalt mündet.

Weiterhin kann vorgesehen sein, dass zwischen dem Außenring des Wälzlagers und dem stationären Trägerkörper und/oder zwischen dem Innenring des Wälzlagers und dem rotierenden Dichtungsring ein statisches Dichtelement, insbesondere ein O-Ring, angeordnet ist.

Sehr vorteilhaft ist es, wenn der kappenförmige rotierende Dichtungsring, der die äußere Fläche der Lageranordnung bildet, verschleißgeschützt ist. Hier kommt zum einen eine Härtung des Materials in Frage. Möglich ist aber auch eine Beschichtung mit einem geeigneten Beschichtungsmaterial.

Während bislang stets auf eine reibungsfreie Labyrinthdichtung bei Fahrmotor-Lageranordnung abgestellt wurde, sieht die Erfindung also in Ergänzung eine speziell ausgebildete reibende Dichtungseinheit vor. Die Lageranordnung kann so in wesentlich besserer Weise vor dem Eintritt von Wasser und Schmutz in das Wälzlager geschützt werden, ohne, dass das Reibmoment im Betrieb erheblich zunehmen würde.

Die vorgeschlagene Dichtungsanordnung erlaubt es, Wasser und Schmutz in sehr viel effizienterer Weise als bislang vom Eintritt in das Wälzlager abzuhalten. Daher kann die Gebrauchsdauer des Wälzlagers entsprechend gesteigert werden. Auch die Anzahl der nötigen Wartungsintervalle kann herabgesetzt werden, was sich kostendämpfend auswirkt.

Die ergänzenden zur Labyrinthdichtung vorgesehenen reibend anliegenden Dichtungselemente verhindern den Eintritt von Kontaminationen und insbesondere von Wasser effizient. Bei gelegentlichem Nachschmieren der Dichtungsanordnung wird nicht nur eine geringe Dichtungsreibung sichergestellt, sondern auch das Verhindern bzw. Reduzieren von Verschleiß der reibend anliegenden Dichtlippen.

Die vorgeschlagene Konzeption einer Lageranordnung kommt also in einem Fahrmotor eines Schienenfahrzeugs (TMBU - Traction Motor Bearing Unit) zum Einsatz. Die Dichtungselemente sind nachschmierbar, so dass die Lebensdauer der Dichtung und somit die Gebrauchsdauer des Lagers und des gesamten Fahrmotors verlängert werden können. Gegebenenfalls vorgesehene Wartungsintervalle können erhöht werden.

Das Wälzlager ist insbesondere als Zylinderrollenlager oder als Rillenkugellager ausgebildet.

Das vorgeschlagene Konzept kann sowohl bei Lageranordnung mit Sensoren als auch bei solchen ohne solche eingesetzt werden.

In der Zeichnung ist ein Ausführungsbeispiel der Erfindung dargestellt. Es zeigen:
- Fig. 1: im Radialschnitt eine Lageranordnung eines Schienenfahrzeug-Fahrmotors, wobei nur der radial obenliegende Bereich dargestellt ist, und
- Fig. 2: die Lageranordnung gemäß Fig. 1, wobei hier nur der radial unterliegende Bereich dargestellt ist.

In den Figuren ist eine Lageranordnung 1 skizziert, mit der eine rotierende Welle in einem Fahrmotor eines Schienenfahrzeugs gelagert werden kann, beispielsweise einer Straßenbahn.

Die Lageranordnung 1 umfasst ein Wälzlager 2, das einen Innenring 3, einen Außenring 4 und zwischen den Ringen angeordnete Wälzkörper 5 aufweist. Das Lager hat eine Drehachse, die sich in eine axiale Richtung a erstreckt. Die Abdichtung des Wälzlagers 1 zwecks Schutzes vor Wasser und Schmutz wird von einer Dichtungsanordnung 6 bewerkstelligt.

Das Wälzlager 2 kann in beliebiger Weise ausgeführt sein, d. h. beispielsweise in Stahlausführung, in Hybridausfiihrung mit keramischen Komponenten (Wälzkörpern) oder mit einer Isolationsbeschichtung der Komponenten.

Die Dichtungsanordnung 6 ist wie folgt ausgefiihrt:

Sie umfasst einen stationären Trägerkörper 7, der fest mit dem Außenring 4 verbunden ist. Der Trägerkörper 7 hat im Radialschnitt eine im Wesentlichen U-förmig Kontur. Weiterhin hat die Dichtungsanordnung 6 einen rotierenden Dichtungsring 8, der drehfest mit dem Innenring 3 (oder mit der Motorwelle des Fahrmotors) verbunden ist. Der Dichtungsring 8 hat im Radialschnitt eine im Wesentlichen L-förmige Kontur.

Damit ein Großteil des Wassers, was in den Bereich der Lageranordnung vordringt, möglichst schnell und effizient abgeführt wird, weist der Trägerkörper 7 eine Ringnut 9 auf, die im Radialschnitt im vorliegenden Ausführungsbeispiel eine rechteckige bzw. quadratische Form aufweist. Wasser, das in die Ringnut 9 gelangt, wird in dieser nach unten abgeführt, wo es abtropfen kann, ohne in die Lageranordnung zu gelangen.

Ein möglichst guter Verschluss der Lageranordnung vor Wasser wird dadurch erreicht, dass am radial außenliegenden Ende 14 des Dichtungsrings 8 ein sich in axiale Richtung a erstreckender Überstand 15 vorgesehen ist, der die Stirnseite 16 des Trägerkörpers 7 dachartig überragt. Dabei erstreckt sich der Überstand 15 so weit, dass er mit der einen Seitenfläche 17 der Ringnut 9 bündig abschließt. Zwischen dem Überstand 15 und dem radial außenliegenden Ende des Trägerkörpers 7 bildet sich dabei ein Dichtungsspalt 18 aus, der den Eintritt von Wasser erschwert.

Damit Wasser möglichst gut abgeleitet und auch im gegebenen Falle weggeschleudert wird, ist die radial außenliegende Fläche des Überstands 15 mit zwei konischen Begrenzungsflächen 19 und 20 versehen. Zwecks guter Ableitung von Wasser sind die konischen Begrenzungsflächen 19, 20 vorzugsweise so groß wie möglich ausgebildet.

Der Dichtungsring 8 weist an seiner Innenseite eine sich radial erstreckende Anlauffläche 10 auf. An dieser laufen zwei radial versetzt angeordnete Dichtungselemente 11 und 12 mit ihren Dichtlippen an. Die beiden Dichtelemente 11 und 12 sind in konzentrischen Ringnuten 21 und 22 in der äußeren Stirnfläche des Trägerkörpers 7 angeordnet bzw. hier fixiert, z. B. eingeklebt. Bei den Dichtungselementen 11, 12 handelt es sich beispielsweise um solche mit einem V-Ring (wie in den Figuren angedeutet), wobei bevorzugt TPUR-Material (Thermoplastisches Polyurethan) für die Dichtung zum Einsatz kommt.

Weiterhin ist vorgesehen, dass im radial weiter innenliegenden Bereich der Dichtungsanordnung 6 zwei Abschnitte des Trägerkörper 7 und des Dichtungsrings 8 parallel zueinander verlaufen und zwischen sich einen Dichtungsspalt 13 ausbilden. Am Trägerkörper 7 wird besagter Abschnitt durch einen axialen Ringabschnitt 23 gebildet, der sich bis in eine ringnutförmige Ausnehmung 24 erstreckt, die im Bereich des Innenrings 3 ausgebildet wird. Konkret wird die Ausnehmung 24 durch eine zylindrische Fläche 25 des Innenrings 3 gebildet, auf die ein Bauteil 26 in Form eines Impulsgebers aufgesetzt ist. Es ergibt sich auch hier vorteilhaft ein labyrinthartiger Dichtungsspalt.

Das Bauteil 26, also der Impulsgeber, ist Bestandteil einer Sensoreinrichtung, mit der die Drehzahl, die Drehrichtung und die Absolutposition des Wälzlagers im Betrieb gemessen werden können. Das Bauteil 26 ist daher vorliegend als Magnetring ausgebildet. Das Signal wird von einem Sensorelement 27 erfasst, das im Trägerkörper 7 befestigt ist.

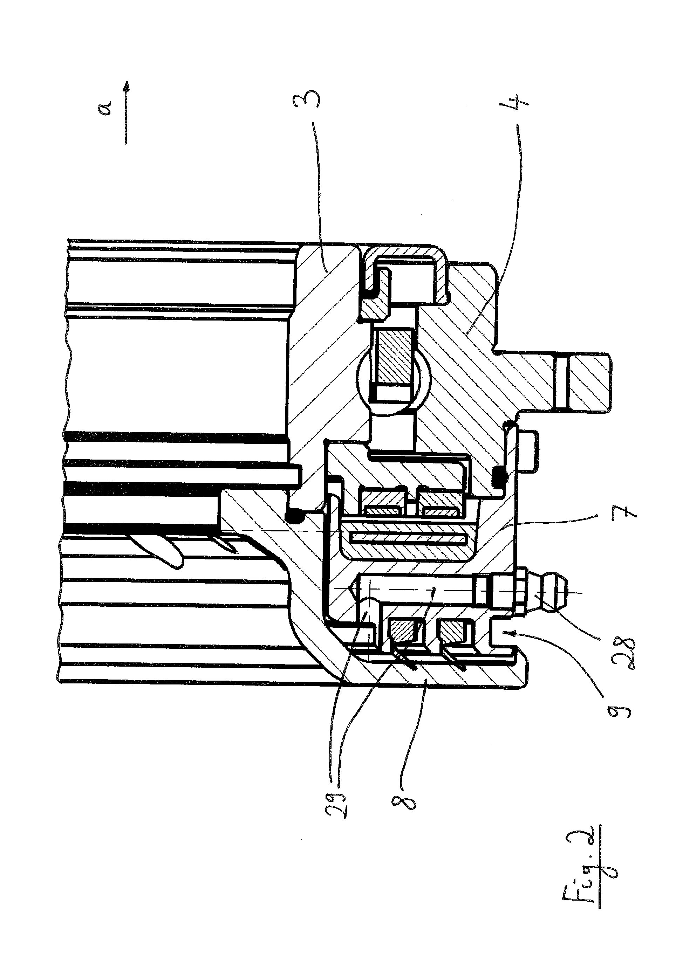

Zur Nachschmierung der Dichtungselemente ist - was in Fig. 2 gesehen werden kann - ein Schmierelement 28 in Form eines Schmiernippels so angeordnet, dass in den Bereich der Dichtungsanordnung 6 Schmierfett eingespritzt werden kann. Hierzu steht das Schmierelement 28 fluidisch mit einem Kanal 29 in Verbindung, der in den Ringraum führt, der zwischen den beiden Dichtungselementen 11 und 12 auf der einen Seite und dem Dichtungsspalt 13 auf der anderen Seite liegt. Durch Vorlage einer hinreichenden Menge an Schmierfett in diesem Raum kann für ein hohes Maß an Dichtigkeit der Dichtungsanordnung 6 gesorgt werden.

Von den Schmiernippeln 28 werden bevorzugt mehrere - vorzugsweise zwei - über den Umfang des Wälzlagers 2 bzw. der Dichtungsanordnung vorgesehen.

Das Dichtungskonzept stellt also darauf ab, dass die Dichtung additiv zu einem Labyrinthspalt zwei reibend anliegende Dichtungselemente aufweist. Das radial außenliegende reibend anliegende Dichtungselement 11 hält bereits den größten Teil von eindringendem Wasser und Schmutz ab. Das zweite Dichtungselement 12 hält restlich eindringendes Wasser bzw. eindringenden Schmutz ab.

Der rotierende Dichtungsring 8 kann auf der gelagerten Welle oder direkt auf dem Lagerinnenring montiert sein.

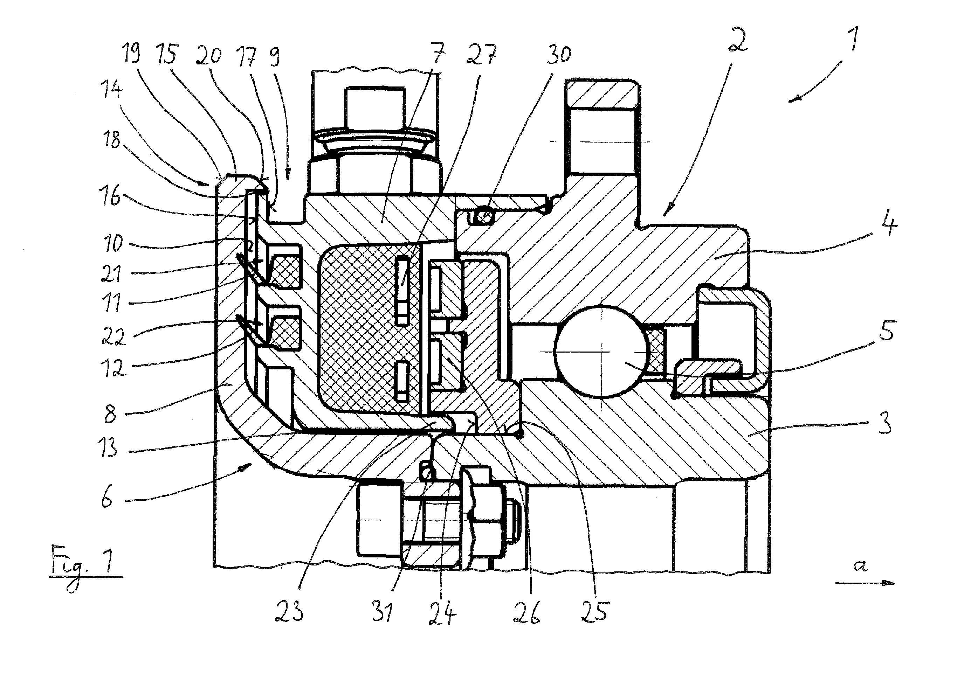

Zur statischen Abdichtung des Systems können an den relevanten Stellen O-Ring-Dichtungen 30 und 31 vorgesehen sein, s. Fig. 1, so dass hier Wassereintritt verhindert wird.

Wie bereits erwähnt, kann die außenliegende Oberfläche des Dichtungsrings 8 gegen Verschleiß stabilisiert sein. Um eine hinreichende Härte der Oberfläche zu erreichen, kann Härtung oder eine Beschichtung vorgesehen werden. Geeignete Beschichtungsmaterialien sind beispielsweise Hartchrom, Nickel-Phosphor oder Duralloy TDC (Thin Dense Chrome).

Infolge der Nachschmiermöglichkeit kann die Gebrauchsdauer der Dichtungsanordnung somit des Wälzlagers erhöht werden, was wiederum unmittelbar eine positive Erhöhung der Lebensdauer des Fahrmotors zur Folge hat, in den die beschriebenen Lager eingesetzt sind. Irgendeine Art der Demontage zwecks Nachschmierung ist nicht erforderlich.

### Bezugszeichenliste

- 1: Schienenfahrzeug-Fahrmotor-Lageranordnung
- 2: Wälzlager
- 3: Innenring
- 4: Außenring
- 5: Wälzkörper
- 6: Dichtungsanordnung
- 7: stationärer Trägerkörper
- 8: rotierender Dichtungsring
- 9: Ringnut
- 10: sich radial erstreckende Anlauffläche
- 11: Dichtungselement
- 12: Dichtungselement
- 13: Dichtungsspalt (erster Labyrinthspalt)
- 14: radial außenliegendes Ende des rotierenden Dichtungsrings
- 15: Überstand
- 16: Stirnseite des stationären Trägerkörpers
- 17: Seitenfläche der Ringnut
- 18: Dichtungsspalt (zweiter Labyrinthspalt)
- 19: konische Begrenzungsfläche
- 20: konische Begrenzungsfläche
- 21: Ringnut
- 22: Ringnut
- 23: axialer Ringabschnitt
- 24: ringnutförmige Ausnehmung
- 25: zylindrische Fläche des Innenrings
- 26: Bauteil (Impulsgeber)
- 27: Sensorelement
- 28: Schmierelement (Schmiernippel)
- 29: Kanal
- 30: O-Ring-Dichtung
- 31: O-Ring-Dichtung

- a: axiale Richtung

## Patentansprüche

1. Schienenfahrzeug-Fahrmotor-Lageranordnung (1), umfassend mindestens ein Wälzlager (2), das einen Innenring (3) und einen Außenring (4) aufweist, wobei zwischen Innenring (3) und Außenring (4) mindestens eine Reihe Wälzkörper (5) angeordnet ist, wobei die Lageranordnung (1) zumindest in einem axialen Endbereich des Wälzlagers (2) eine Dichtungsanordnung (6) aufweist,
**dadurch gekennzeichnet, dass**
die Dichtungsanordnung (6) aufweist:
einen stationären Trägerkörper (7), der mit einem der Lagerringe (4) direkt oder indirekt drehfest verbunden ist, und einen rotierenden Dichtungsring (8), der mit dem anderen der beiden Lagerringe (3) direkt oder indirekt drehfest verbunden ist,
wobei der stationäre Trägerkörper (7) eine umlaufende Ringnut (9) zum Auffangen und Ableiten von Flüssigkeit aufweist,
wobei der rotierende Dichtungsring (8) eine sich radial erstreckende Anlauffläche (10) aufweist, an der mindestens zwei radial versetzte Dichtungselemente (11, 12) reibend anlaufen, die mit dem stationären Trägerkörper (7) fest verbunden sind, und
wobei zwischen dem stationären Trägerkörper (7) und dem rotierenden Dichtungsring (8) ein sich in axiale Richtung (a) erstreckender Dichtungsspalt (13) ausgebildet ist.

2. Schienenfahrzeug-Fahrmotor-Lageranordnung nach Anspruch 1, **dadurch gekennzeichnet, dass** der rotierende Dichtungsring (8) an seinem radial außenliegenden Ende (14) einen sich in axiale Richtung (a) erstreckenden Überstand (15) aufweist, der eine Stirnseite (16) des stationären Trägerkörpers (7) überragt.

3. Schienenfahrzeug-Fahrmotor-Lageranordnung nach Anspruch 2, **dadurch gekennzeichnet, dass** der Überstand (15) mit einer Seitenfläche (17) der umlaufenden Ringnut (9) axial bündig abschließt.

4. Schienenfahrzeug-Fahrmotor-Lageranordnung nach Anspruch 3, **dadurch gekennzeichnet, dass** zwischen dem Überstand (15) und dem stationären Trägerkörper (7) ein sich in axiale Richtung (a) erstreckender Dichtungsspalt (18) ausgebildet ist.

5. Schienenfahrzeug-Fahrmotor-Lageranordnung nach einem der Ansprüche 1 bis 4, **dadurch gekennzeichnet, dass** der rotierende Dichtungsring (8) an seinem radial außenliegenden Ende (14) mindestens eine, vorzugsweise zwei, konisch ausgebildete Begrenzungsflächen (19, 20) aufweist.

6. Schienenfahrzeug-Fahrmotor-Lageranordnung nach einem der Ansprüche 1 bis 5, **dadurch gekennzeichnet, dass** der stationären Trägerkörper (7) in seiner dem rotierenden Dichtungsring (8) zugewandten stirnseitigen Bereich mindestens zwei radial versetzte Ringnuten (21, 22) zur Aufnahme je eines Dichtungselements (11, 12) aufweist.

7. Schienenfahrzeug-Fahrmotor-Lageranordnung nach einem der Ansprüche 1 bis 6, **dadurch gekennzeichnet, dass** der stationäre Trägerkörper (7) einen den sich in axiale Richtung (a) erstreckenden Dichtungsspalt (13) begrenzenden axialen Ringabschnitt (23) aufweist, wobei sich der Ringabschnitt (23) in eine ringnutförmige Ausnehmung (24) hinein erstreckt, die stirnseitig an dem sich drehenden Lagerring (3) ausgebildet ist.

8. Schienenfahrzeug-Fahrmotor-Lageranordnung nach Anspruch 7, **dadurch gekennzeichnet, dass** die ringnutförmige Ausnehmung (24) durch eine zylindrische Fläche (25) des sich drehenden Lagerrings (3) sowie von einem auf die zylindrische Fläche (25) aufgesetzten separaten Bauteil (26) gebildet wird, wobei das Bauteil (26) vorzugsweise ein Impulsgeber für ein Sensorelement (27) ist, das fest im stationären Trägerkörper (7) montiert ist.

9. Schienenfahrzeug-Fahrmotor-Lageranordnung nach einem der Ansprüche 1 bis 8, **dadurch gekennzeichnet, dass** im stationären Trägerkörper (7) mindestens ein Schmierelement (28) montiert ist, mit dem Schmierstoff in den Bereich der Dichtungsanordnung (6) eingespritzt werden kann.

10. Schienenfahrzeug-Fahrmotor-Lageranordnung nach Anspruch 9, **dadurch gekennzeichnet, dass** das Schmierelement (28) fluidisch mit einem Kanal (29) in Verbindung steht, der in den Ringraum zwischen den mindestens zwei Dichtungselementen (11, 12) und dem sich in axiale Richtung (a) erstreckenden Dichtungsspalt (13) mündet.

11. Schienenfahrzeug-Fahrmotor-Lageranordnung nach einem der Ansprüche 1 bis 10, **dadurch gekennzeichnet, dass** zwischen dem Außenring (4) des Wälzlagers (2) und dem stationären Trägerkörper (7) und/oder zwischen dem Innenring (3) des Wälzlagers (2) und dem rotierenden Dichtungsring (8) ein statisches Dichtelement, insbesondere ein O-Ring, angeordnet ist.
